# EUROPÄISCHE PATENTSCHRIFT

(11) **EP 1 070 215 B1**
(45) Veröffentlichungstag und Bekanntmachung des Hinweises auf die Patenterteilung: **02.06.2004**
(21) Anmeldenummer: 99900432.8
(22) Anmeldetag: 25.01.1999
(51) Int. Cl.: F16L 33/00, F16L 33/18, F16L 33/22

(54) **VORRICHTUNG ZUM VERBINDEN EINES ROHRSTUTZENS, ROHRFÖRMIGEN ARMATURENTEILS ODER FITTINGS MIT EINEM ROHR**
DEVICE FOR CONNECTING A PIPE SOCKET, A TUBULAR MOUNTING PART OR A FITTING TO A PIPE
DISPOSITIF POUR RACCORDER UNE TUBULURE, UNE PIECE DE ROBINETTERIE OU UN RACCORD TUBULAIRE A UN TUYAU

(30) Priorität: 03.04.1998 CH 80098
(43) Veröffentlichungstag der Anmeldung: 24.01.2001
(73) Patentinhaber: GEBERIT TECHNIK AG, 8645 Jona (CH)
(72) Erfinder: WILI, Hansruedi, CH-8645 Jona (CH)
(74) Vertreter: Groner, Manfred
(86) Internationale Anmeldenummer: PCT/CH1999/000032
(87) Internationale Veröffentlichungsnummer: WO 1999/051907

(56) Entgegenhaltungen:
- EP-A- 0 132 673
- DE-A- 19 707 827
- DE-U- 9 113 050
- GB-A- 438 250
- US-A- 3 984 133

## Beschreibung

Die Erfindung betrifft eine Verbindungsanordnung.

Die DE-U-91 13 050 des Anmelders zeigt eine Vorrichtung, die ein Verbindungsteil aufweist, das an einem oder an beiden Enden einen Stutzen besitzt, mit dem das Ende eines Verbundrohres durch Verpressen mittels einer Presszange wasserdicht angeschlossen werden kann. Bei einer Ausführung besitzt das Verbindungsteil ein erstes Ende für die Herstellung einer Pressverbindung und ein zweites Ende mit einem Aussengewinde zur Herstellung einer Schraubverbindung zu einer sanitären Armatur. Bei einer weiteren Ausführung besitzen beide Enden jeweils einen Stutzen zur Herstellung einer Pressverbindung.

Die EP-A-0 132 673 offenbart eine Verbindungsvorrichtung für Druckleitungen und besitzt einen Stecker, der einen Anschlussdorn für eine auf diesen aufzuschiebende Rohrleitung besitzt, wobei eine Verpressung der Rohrleitung hier nicht vorgesehen ist. Der Stecker weist zudem einen Steckerschaft auf, der in eine Überwurfmutter eingesetzt ist. Der Steckerschaft besitzt an seiner Aussenseite eine umlaufende Nut, in die ein Haltering einrastet, welcher an einem inneren Ende der Überwurfmutter angeordnet ist.

Die GB-438,250 offenbart eine Verbindung für einen Gartenschlauch.

Der Erfindung liegt die Aufgabe zugrunde, ein Verbindungsteil der genannten Art zu schaffen, das für die Montage noch einfacher zu handhaben ist.

Die Aufgabe ist bei einer gattungsgemässen Anordnung gemäss Anspruch 1 gelöst. Zum Anschliessen eines Rohres an eine Armatur, einen Fitting oder einen Rohrstutzen muss dann vor oder nach der Herstellung der Pressverbindung mit dem Rohr das Verbindungsteil lediglich noch in den Aufnahmeteil eingesteckt werden. Zeitaufwendige Schraubvorgänge werden vermieden und an engen und schlecht zugänglichen Montageorten wird die Verbindung vereinfacht. Nach der Erfindung ist das zweite Ende im Wesentlichen gleich wie das erste Ende ausgebildet. Das Verbindungsteil besitzt somit zwei Enden, die jeweils durch eine Pressverbindung mit einem Rohr verbunden werden können. Das Verbindungsteil lässt sich somit so ausbilden, dass es wahlweise zum Verbinden von Rohren oder zum Verbinden eines Rohres mit einer Armatur, einem Rohrstutzen oder einem Fitting verwendet werden kann. Die Lagerhaltung und auch die Montage wird damit wesentlich vereinfacht.

Nach einer Weiterbildung der Erfindung ist ein Gehäuse des Aufnahmeteils mit einer Öffnung versehen, in die ein radial spreizbarer Haltering eingesetzt ist. Dadurch ergibt sich eine konstruktiv besonders vorteilhafte Ausbildung der Steckverbindung. Dieser Haltering kann als separates loses Teil als Kunststoffteil hergestellt werden. Beim Einsetzen des zweiten Endes in den Aufnahmeteil wird der Haltering radial gespreizt und verbindet das Verbindungsteil mit dem Rohrstutzen, rohrförmigen Armaturenteil oder dem Fitting.

Weitere vorteilhafte Merkmale ergeben sich aus den abhängigen Patentansprüchen, der nachfolgenden Beschreibung sowie der Zeichnung.

Ein Ausführungsbeispiel der Erfindung wird nachfolgend anhand der Zeichnung näher erläutert. Es zeigen:
- Figur 1: einen Längsschnitt durch eine erfindungsgemässe Vorrichtung,
- Figur 2: einen Schnitt durch einen Haltering,
- Figur 3: eine Ansicht des Halterings gemäss Figur 2,
- Figur 4: einen Schnitt durch einen Fitting, und
- Figur 5: eine Ansicht des Fittings nach Figur 4.

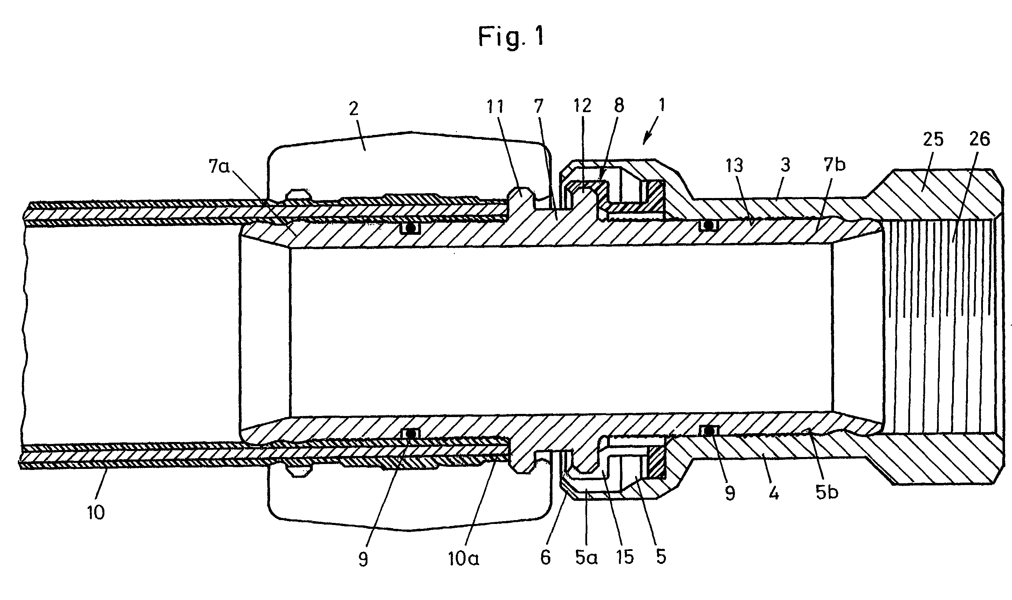

Die in Figur 1 gezeigte Vorrichtung 1 besteht im Wesentlichen aus einem Verbindungsteil 7, einem Fitting 4, in den ein Haltering 8 eingesetzt ist. Das Verbindungsteil 7 besitzt ein erstes Ende 7a und ein zweites Ende 7b. Beide Enden sind als zylindrische Stutzen ausgebildet und besitzen eine unebene Aussenseite 13, in die jeweils ein gummielastischer Dichtungsring 9 eingesetzt ist. Etwa mittig weist das Verbindungsteil 7 zwei angeformte, im Abstand zueinander angeordnete und radial nach aussen sich erstreckende und umlaufende Flansche 11 und 12 auf.

Das erste Ende 7a bildet mit einem Rohr 10 eine Pressverbindung. Das Rohr 10 ist vorzugsweise ein Wasserrohr und beispielsweise ein Verbundrohr. Solche Rohre sind allgemein bekannt und lassen sich zum Herstellen einer Pressverbindung plastisch verformen. In der Figur 1 ist schematisch eine Presszange 2 angedeutet, mit welcher die Pressverbindung hergestellt wurde. Diese Presszange 2 wird selbstverständlich nach dem Herstellen der Pressverbindung wieder entfernt. Der Flansch 11 dient hier als Anschlag für das Rohr 10 und zur Positionierung der Presszange 2. Der Dichtungsring 9 ist zwischen dem Rohrende 7a und dem Rohrende 10a verpresst und gewährleistet die Dichtigkeit der Pressverbindung.

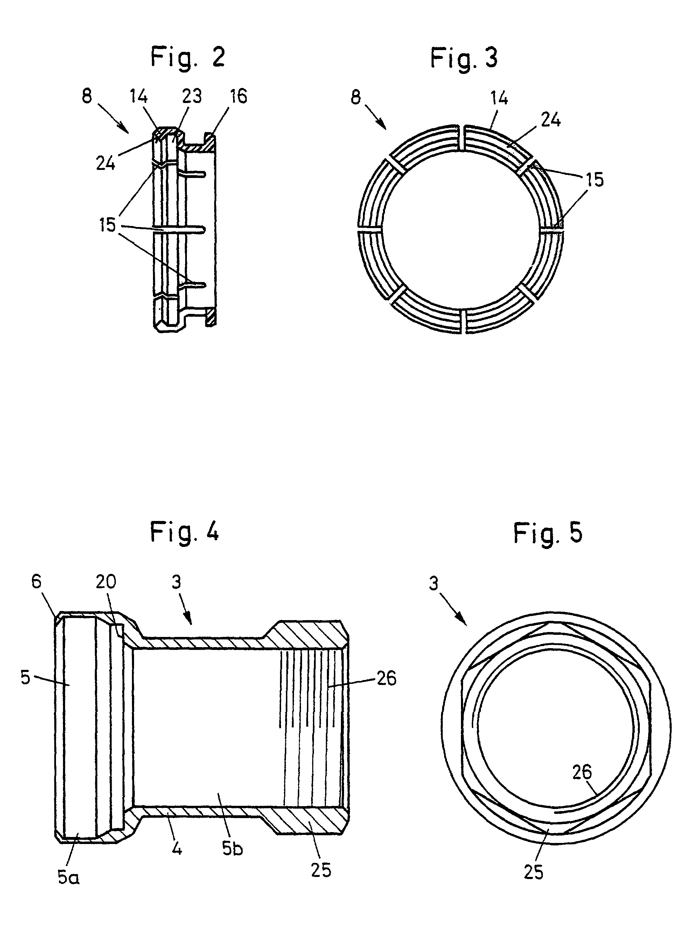

Das zweite Ende 7b ist gleich ausgebildet wie das erste Ende 7a. Der Aussendurchmesser dieses zweiten Endes 7b kann jedoch unterschiedlich sein vom Aussendurchmesser des ersten Endes 7a. Es ist aber jedenfalls so ausgebildet, dass es ebenfalls zur Herstellung einer Pressverbindung verwendet werden kann. Das zweite Ende 7b ist somit ebenfalls ein rohrförmiger Stutzen, bildet hier jedoch einen Steckerteil, der in eine Öffnung 5 eines Aufnahmeteils 4 des Fittings 3 eingesetzt ist. Das zweite Ende 7b bildet mit dem Aufnahmeteil 4 eine Steckverbindung. Wie insbesondere die Figur 4 deutlich erkennen lässt, besteht die Öffnung 5 aus einem ringförmig erweiterten Bereich 5a und einem etwas schmaleren zylindrischen rohrförmigen Bereich 5b. In den Bereich 5a ist gemäss Figur 1 der Haltering 8 eingesetzt, der vorzugsweise aus einem Kunststoff im Spritzgussverfahren hergestellt ist. Dieser Ring 8 besitzt an einem vorderen Ende mehrere gleiche Krallen 14, die durch axiale Schlitze 15 gebildet sind und die an einem hinteren Rand 16 miteinander verbunden sind. Der Rand 16 liegt gemäss Figur 1 an einer Schulter 20 (Figur 4) des Aufnahmeteils 4 an. Die Krallen 14 sind radial und elastisch nach aussen spreizbar. Sie bilden insgesamt eine innenseitige und umlaufende Rille 23, die zur Aufnahme des Flansches 12 dient. Der Haltering 8 ist lose und mit wenig Spiel in die Öffnung 5 eingesetzt.

Wird das zweite Ende 7b zur Herstellung der Steckverbindung in die Öffnung 5 eingeschoben, so werden die Krallen 14 beim Aufstecken des Flansches 12 an geneigten Auflaufflächen 24 elastisch und radial nach aussen gespreizt, so dass der Flansch 12 in die Rille 23 einrasten kann. Die Krallen 14 gehen dann im wesentlichen wieder auf die Ruheposition zurück und umgreifen den Flansch 12.

Das Aufnahmeteil 4 weist am vorderen Ende einen radial schräg nach innen gerichteten Rand 6 auf, der für den Haltering 8 einen axialen Anschlag bildet. Ist nun der Flansch 12 in den Haltering 8 eingerastet, so kann der Haltering 8 nicht mehr aus der Öffnung 5 herausgezogen werden, da wie erwähnt der Rand 6 für den Haltering 8 einen Anschlag bildet. Der Flansch 12 hält die Krallen 14 in der gezeigten Position, so dass diese Krallen 14 nach innen radial nicht ausweichen können, wenn versucht wird, die Steckverbindung durch Herausziehen des Verbindungsteils 7 zu lösen. Beim vollständigen Einstecken des Verbindungsteils 7 in die Öffnung 5 des Fittings 3 ist somit eine im wesentlichen unlösbare Steckverbindung gebildet. Die Verbindung könnte durch Zerstörung des Halteringes 8 nötigenfalls gelöst werden.

Die Dichtigkeit der Steckverbindung wird durch den Dichtungsring 9 gewährleistet, der im Bereich 5b der Öffnung am rohrförmigen Abschnitt des Fittings 3 innenseitig anliegt. Dieser rohrförmige Bereich 5b nimmt einen wesentlichen Teil des zweiten Endes 7b auf und liegt an diesem Ende 7b am Verbindungsteil 7a und bildet eine Abstützung. Das Verbindungsteil 7 ist damit in der Öffnung 5 des Fittings 3 axial sicher gehalten, abgedichtet und gegen ein axiales Verkanten sicher gehalten.

Das Verbindungsteil 7 kann auch zum Verbinden von zwei Rohrenden verwendet werden. Das zweite Ende 7b wird in diesem Fall wie das erste Ende 7a zur Herstellung einer Pressverbindung verwendet. Der Flansch 12 bildet in diesem Fall wie der Flansch 11 einen Anschlag für ein Rohr 10 und zur Führung der Presszange 2.

Der Fitting 3 ist beispielsweise aus Messing hergestellt. Für einen weiteren Anschluss weist er an einem Anschlussende 15 ein Innengewinde 26 auf. Der Fitting 3 lässt sich somit am Ende 25 mittels einer Schraubverbindung mit einem weiteren Teil verbinden. Der Fitting 3 kann aber auch eine Armatur, ein rohrförmiger Armaturteil oder ein Rohrstutzen sein. Wesentlich ist der rohrförmige Aufnahmeteil 4, der die Herstellung einer Steckverbindung mit dem Teil 7 ermöglicht.

Bei der Montage wird in der Regel mit der Presszange 2 die Pressverbindung zwischen dem Teil 7 und dem Verbundrohr 10 hergestellt. Das freie Ende 7b wird anschliessend wie oben erläutert in den Aufnahmeteil 4 eingesetzt. Die Rastverbindung mit dem Haltering 8 erfolgt hier selbsttätig und Werkzeuge sind hierzu nicht erforderlich. Eine solche Steckverbindung kann auch an einem schwer zugänglichen Ort sehr einfach und wie erwähnt ohne Werkzeuge hergestellt werden. Das Einrasten des Halteringes 8 ist deutlich erkennbar und kann auch nachgeprüft werden. Damit ist sichergestellt, dass die Steckverbindung immer vollständig hergestellt wird. Auf dem Gebiet der Sanitärtechnik ist dies ein wesentlicher Gesichtspunkt.

## Patentansprüche

1. Anordnung, umfassend ein Verbindungsteil (7) mit zwei stutzenförmig ausgebildeten Enden (7a, 7b) die jeweils einen Flansch (11, 12) und einen Dichtungsring besitzen und die jeweils wahlweise zur Herstellung einer Pressverbindung oder Steckverbindung geeignet sind, und eine Armatur, einen Fitting oder Rohrstutzen für eine Verbindung mit einem Aufnahmeteil (4), in das das Verbindungsteil (7) einrastbar ist, wobei in einen ringförmig erweiterten Bereich (5a) einer Öffnung (5) des Aufnahmeteils (4) ein radial spreizbarer Haltering (8) eingesetzt ist, wobei der Haltering (8) eine innenseitig umlaufende Rille (23) aufweist, in die ein Flansch (12) des Verbindungsteils (7) einrastbar ist.

2. Anordnung nach Anspruch 1, **dadurch gekennzeichnet, dass** der Haltering (8) eine innenseitig umlaufende Rille (23) aufweist, in die ein Flansch (12) des Verbindungsteils (7) einrastbar ist.

3. Anordnung nach Anspruch 1 oder 2, **dadurch gekennzeichnet, dass** die Öffnung (5) zur axialen Fixierung des Halterings (8) einen hinteren und einen vorderen Anschlag (20, 6) aufweist.

4. Anordnung nach Anspruch 3, **dadurch gekennzeichnet, dass** ein hinterer Anschlag (20) eine Schulter und ein vorderer Anschlag (6) einen radial nach innen ragender Mündungsrand bilden.

5. Anordnung nach einem der Ansprüche 1 bis 4, **dadurch gekennzeichnet, dass** die Armatur, der Fitting oder der Rohrstutzen ein Gehäuse aus Metall aufweist und der Haltering (8) aus Kunststoff hergestellt ist.

6. Anordnung nach Anspruch 1, wobei der Rohrstutzen, der rohrförmige Armaturenteil oder der Fitting (13) mit einem Rohr (10), insbesondere Wasserrohr, verbunden ist, **dadurch gekennzeichnet, dass** das Verbindungsteil (7) mit einem ersten Ende (7a) durch eine Pressverbindung mit dem Rohr (10) und mit einem zweiten Ende (7b) mit dem Rohrstutzen, Armaturenteil oder Fitting (3) verbunden ist, wobei das zweite Ende (7b) des Verbindungsteils (7) mit einem Aufnahmeteil (4) des Rohrstutzens, rohrförmigen Armaturenteils oder Fitting (3) eine Steckverbindung bildet und das zweite Ende (7b) des Verbindungsteils (7) im Wesentlichen gleich ausgebildet ist wie das erste Ende (7a).

7. Anordnung nach Anspruch 6, **dadurch gekennzeichnet, dass** der Haltering (8) lose in die genannte Öffnung (5) eingesetzt ist.

8. Anordnung nach Anspruch 6 oder 7, **dadurch gekennzeichnet, dass** der Haltering (8) Greifmittel (14)aufweist, die einen Flansch (12) des Verbindungsteils (7) umgreifen.

9. Anordnung nach Anspruch 8, **dadurch gekennzeichnet, dass** die Greifmittel (14) mehrere radial elastisch auslenkbare Klauen aufweisen.

10. Anordnung nach einem der Ansprüche 6 bis 9, **dadurch gekennzeichnet, dass** der Haltering (8) aus einem elastischen Kunststoff hergestellt ist.

11. Anordnung nach einem der Ansprüche 6 bis 10, **dadurch gekennzeichnet, dass** der Aufnahmeteil (4) einen in die genannte Öffnung (5) eingreifenden Rand aufweist, der einen axialen Anschlag für den Haltering (8) bildet.

12. Anordnung nach einem der Ansprüche 6 bis 11, **dadurch gekennzeichnet, dass** der Verbindungsteil (7) ein Pressfitting ist.

13. Anordnung nach Anspruch 12, **dadurch gekennzeichnet, dass** der Verbindungsteil (7) wahlweise zum Verbinden von zwei Rohren oder zum Verbinden eines Rohres mit einem Rohrstutzen, rohrförmigen Armaturenteil oder Fitting ausgebildet ist.

14. Anordnung nach einem der Ansprüche 6 bis 13, **dadurch gekennzeichnet, dass** der Aufnahmeteil (4) einen rohrförmigen Bereich (5) aufweist, in welchem das zweite Ende (7b) abgestützt ist.

15. Anordnung nach einem der Ansprüche 6 bis 14, **dadurch gekennzeichnet, dass** das Verbindungsteil (7) zwei im Abstand zueinander angeordnete Flansche (11, 12) aufweist, wobei der eine Flansch (12) zum Herstellen einer Steckverbindung und der andere Flansch (11) zum Herstellen einer Pressverbindung verwendet wird.

16. Anordnung nach einem der Ansprüche 6 bis 15, **dadurch gekennzeichnet, dass** der Verbindungsteil (7) zwei aussenseitig und im Abstand zueinander angeordnete Dichtungsringe (9) aufweist.

## Claims

1. Arrangement, comprising a connecting part (7) with two ends (7a, 7b) designed as nipples which each has a flange (11, 12) and a sealing ring and which is suitable for the establishment of a press connection or a plug-in connection and with a pipe socket, a tubular mounting part or a fitting for a connection to a receiving part (4), into which the connecting part (7) is snapped, wherein in a region (5a), that is widened annularly, a radially expandable retaining ring (8) is inserted, wherein the retaining ring (8) has a groove (23) which runs around its inside and into which a flange (12) of the connecting part (7) can be snapped.

2. Arrangement according to claim 1, **characterized in that** the retaining ring (8) has a groove (23) which runs around its inside and into which a flange (12) of the connecting part (7) can be snapped.

3. Arrangement according to claim 1 or 2, **characterized in that** the opening (5) has a rear and a front stop (20, 6) for the axial fixing of the retaining ring (8).

4. Arrangement according to claim 3, **characterized in that** a rear stop (20) is a shoulder and a front stop (6) is a radially inwardly projecting mouth edge.

5. Arrangement as claimed in one of the claims 1 to 4, **characterized in that** the pipe socket, a fitting or a tubular mounting part has a housing made of metal and the retaining ring (8) is produced from plastic.

6. Arrangement as claimed in one of the claims 1 to 4, wherein the pipe socket, the tubular mounting part or the fitting (13) is connected with a pipe (10), particularly water pipe, **characterized in that** the connecting part (7) is connected by a first end (7a) to the pipe (10) by means of a press connection and by a second end (7b) to the pipe socket, mounting part or fitting (3), wherein the second end (7b) of the connecting part (7) forms a plug-in connection with a receiving part (7) of the pipe socket, tubular mounting part or fitting (3) and wherein the second end (7b) of the connecting part (7) is of essentially the same design as the first end (7a).

7. Arrangement according to claim 6, **characterized in that** the retaining ring (8) is inserted loosely into said opening (5).

8. Arrangement according to claim 6 or 7, **characterized in that** the retaining ring (8) has gripping means (14) which grip around a flange (12) of the connecting part (7).

9. Arrangement according to claim 8, **characterized in that** the gripping means (14) have a plurality of radially and elastically deflectable claws.

10. Arrangement as claimed in one of the claims 6 to 9, **characterized in that** the retaining ring (8) is produced from an elastic plastic.

11. Arrangement as claimed in one of the claims 6 to 10, **characterized in that** the receiving part (4) has an edge (6) which engages in said opening (5) and forms an axial stop for the retaining ring (8).

12. Arrangement as claimed in one of the claims 6 to 11, **characterized in that** the connecting part (7) is a press fitting.

13. Arrangement according to claim 12, **characterized in that** the connecting part (7) is designed either for connecting two pipes or for connecting one pipe to a pipe socket, tubular mounting part or fitting.

14. Arrangement as claimed in one of the claims 6 to 13, **characterized in that** the receiving part (4) has a tubular region (5) in which the second end (7b) is supported.

15. Arrangement as claimed in one of the claims 6 to 14, **characterized in that** the connecting part (7) has two flanges (11, 12) arranged at a distance from each other, the one flange (12) being used to produce a plug-in connection and the other flange (11) being used to produce a press connection.

16. Arrangment as claimed in one of the claims 6 to 15, **characterized in that** the connecting part (7) has two sealing rings (9) which are arranged on the outside and at a distance from each other.

## Revendications

1. Structure comprenant un élément de raccordement (7), possédant deux extrémités (7a, 7b) réalisées en forme de manchons qui possèdent chacune une bride (11, 12) et une bague d'étanchéité et qui sont appropriées, au choix, pour réaliser un raccordement par compression ou un raccordement par fiche, et une tuyauterie, un raccord de tuyauterie ou un manchon de tuyau pour un raccordement avec un élément récepteur (4) dans lequel l'élément de raccordement (7) peut être encliqueté, une bague de retenue (8) pouvant être écartée radialement étant insérée dans une zone annulaire élargie (5a) d'une ouverture (5) de l'élément récepteur (4), la bague de retenue (8) présentant une rainure périphérique interne (23) dans laquelle une bride (12) de l'élément de raccordement (7) peut être encliquetée.

2. Structure selon la revendication 1, **caractérisée en ce que** la bague de retenue (8) présente une rainure périphérique interne (23) dans laquelle une bride (12) de l'élément de raccordement (7) peut être encliquetée.

3. Structure selon la revendication 1 ou 2, **caractérisée en ce que** l'ouverture (5) présente une butée antérieure et postérieure (20, 6) pour la fixation axiale de la bague de retenue (8).

4. Structure selon la revendication 3, **caractérisée en ce qu'**une butée postérieure (20) forme un épaulement et qu'une butée antérieure (6) forme un bord d'embouchure orienté radialement vers l'intérieur.

5. Structure selon l'une quelconque des revendications 1 à 4, **caractérisée en ce que** la tuyauterie, le raccord de tuyauterie ou le manchon de tuyau présente un logement en métal et que la bague de retenue (8) est réalisée en matière plastique.

6. Structure selon la revendication 1, dans laquelle le manchon de tuyau, l'élément tubulaire de tuyauterie ou le raccord de tuyauterie (13) est raccordé à un tuyau (10), en particulier à une conduite d'eau, **caractérisée en ce que** l'élément de raccordement (7) est raccordé au tuyau (10) par une première extrémité (7a) au moyen d'un raccordement par compression et par une deuxième extrémité (7b) au manchon de tuyau, à l'élément de tuyauterie ou au raccord de tuyauterie (3), la deuxième extrémité (7b) de l'élément de raccordement (7) formant un raccordement par fiche avec un élément récepteur (4) du manchon de tuyau, de l'élément tubulaire de tuyauterie ou du raccord de tuyauterie (3) et la deuxième extrémité (7b) de l'élément de raccordement (7) étant réalisée pratiquement à l'identique de la première extrémité (7a).

7. Structure selon la revendication 6, **caractérisée en ce que** la bague de retenue (8) est insérée de manière amovible dans ladite ouverture (5).

8. Structure selon la revendication 6 ou 7, **caractérisée en ce que** la bague de retenue (8) présente des moyens d'agrippement (14) qui enveloppent une bride (12) de l'élément de raccordement (7).

9. Structure selon la revendication 8, **caractérisée en ce que** les moyens d'agrippement (14) présentent plusieurs griffes qui peuvent être écartées radialement de manière élastique.

10. Structure selon l'une quelconque des revendications 6 à 9, **caractérisée en ce que** la bague de retenue (8) est réalisée en une matière plastique élastique.

11. Structure selon l'une quelconque des revendications 6 à 10, **caractérisée en ce que** l'élément récepteur (4) présente un bord, s'encliquetant dans ladite ouverture (5), qui forme une butée axiale pour la bague de retenue (8) .

12. Structure selon l'une quelconque des revendications 6 à 11, **caractérisée en ce que** l'élément de raccordement (7) est un raccord de tuyauterie par compression.

13. Structure selon la revendication 12, **caractérisée en ce que** l'élément de raccordement (7) est réalisé, au choix, pour le raccordement de deux tuyaux ou pour le raccordement d'un tuyau à un manchon de tuyau, à un élément tubulaire de tuyauterie ou à un raccord de tuyauterie.

14. Structure selon l'une quelconque des revendications 6 à 13, **caractérisée en ce que** l'élément récepteur (4) présente une zone tubulaire (5) dans laquelle s'appuie la deuxième extrémité (7b).

15. Structure selon l'une quelconque des revendications 6 à 14, **caractérisée en ce que** l'élément de raccordement (7) présente deux brides (11, 12) éloignées l'une de l'autre, l'une des brides (12) étant utilisée pour réaliser un raccordement par fiche et l'autre bride (11) étant utilisée réaliser un raccordement par compression.

16. Structure selon l'une quelconque des revendications 6 à 15, **caractérisée en ce que** l'élément de raccordement (7) présente deux bagues d'étanchéité (9) sur sa face externe et éloignées l'une de l'autre.
